# EUROPÄISCHE PATENTSCHRIFT

(11) **EP 0 445 391 B1**
(45) Veröffentlichungstag und Bekanntmachung des Hinweises auf die Patenterteilung: **09.03.1994**
(21) Anmeldenummer: 90123716.4
(22) Anmeldetag: 10.12.1990
(51) Int. Cl.: F24D 3/14

(54) **Flaches Wärmetauscherelement**
Flat heat exchange element
Elément d'un échangeur de chaleur plat

(30) Priorität: 07.03.1990 DE 4007153
(43) Veröffentlichungstag der Anmeldung: 11.09.1991
(73) Patentinhaber: KM-kabelmetal Aktiengesellschaft, D-49074 Osnabrück (DE)
(72) Erfinder: Geyer, Christoph, W-4500 Osnabrück (DE); Röbbert, Fritz, W-4500 Osnabrück (DE); Clausing, Dieter, W-4500 Osnabrück (DE)

(56) Entgegenhaltungen:
- GB-A- 260 414
- NL-C- 95 575

## Beschreibung

Die Erfindung betrifft ein flaches Wärmetauscherelement aus einer gitterförmigen Trägerplatte und mindestens einer auf der Trägerplatte angeordneten Rohrleitung, zur Verwendung als im Baumaterial einputzfähiger Kühlkörper für Decken und/oder Wände.

Ein derartiges Wärmetauscherelement ist grundsätzlich aus der GB-A-260 414 bekannt. Ferner ist aus der DE-OS 28 47 897 ein Wärmetauscherelement bekannt, welches vorzugsweise in Form von metallischen Profilbahnen für Dächer und Fassaden von Gebäuden zur Aufnahme von Umweltenergie verwendet wird. Mit Schwierigkeiten ist jedoch dann zu rechnen, wenn dieses Wärmetauscherelement in ein Baumaterial eingebettet werden soll. Dies gilt in verstärktem Maße für den Fall, daß das Wärmetauscherelement als Kühlkörper in Raumdecken oder Wänden eingeputzt wird, da der Putz auf den glatten metallischen Oberflächen nur eine geringe Haftung aufweist. Man hat zwar versucht, dieses Problem durch Aufrauhen der Oberfläche zu beseitigen, diese Maßnahme ist jedoch sehr arbeitsaufwendig und die Putzhaftung wird zudem nur unwesentlich verbessert.

Schließlich ist noch in der NL-A-95575 ein flaches Wärmetauscherelement erwähnt, dessen metallische Trägerplatte parallele Schlitze aufweist. Aufgrund des sehr hohen Eigengewichts ist ein derartiges Wärmetauscherelement nicht zum Einputzen in Raumdecken geeignet.

Die Aufgabe der Erfindung besteht darin, ein flaches Wärmetauscherelement der eingangs genannten Gattung zur Verfügung zu stellen, das sich für die Flächenkühlung eignet. Darüber hinaus soll das Wärmetauscherelement mit üblichen Baumaterialien leicht einputzbar sein.

Diese Aufgabe wird erfindungsgemäß dadurch gelöst, daß die gitterförmige Trägerplatte aus Streckmetall besteht und parallel zu einer Kante verlaufende Sicken zur fixierbaren Aufnahme der das zu kühlende Medium führenden Rohrleitung aufweist, daß die Stegdicke der aus Kupfer oder einer Kupferlegierung bestehenden gitterförmigen Trägerplatte 0,4 bis 1,5 mm beträgt und daß die Rohrleitung aus nahtlos gezogenen Kupferrohren mit einer Wanddicke zwischen 0,5 und 1,5 mm und einem Durchmesser zwischen 5 und 18 mm besteht.

Mit der konstruktiven Ausgestaltung des erfindungsgemäßen Wärmetauscherelements ist gewährleistet, daß zwischen Trägerplatte und den Rohren der Rohrleitung ein besonders guter wärmeleitender Kontakt besteht. Vorzugsweise ist die Sicke derart geformt, daß ihre Krümmung im oberen Bereich der Krümmung der durch sie aufgenommenen Rohrleitung entspricht, wobei die Tiefe der Sicke größer ist als der Außendurchmesser der verwendeten Rohre. Zur Verbesserung des wärmeleitenden Kontakts ist es ferner günstig, die Schenkel der Sicken geringfügig aufeinander zuzubiegen, damit diese das Rohr in engem Kontakt um mehr als 180° umklammern.

Neben der Befestigung der Rohre bzw. Rohrleitungen in den auf der gitterförmigen Trägerplatte befindlichen Sicken ist es auch möglich, die Rohre direkt auf die Stege der Trägerplatte aufzulöten bzw. aufzuschweißen. Als Material für die gitterförmigen Trägerplatten aus Streckmetall hat sich ein hochwärmeleitender Werkstoff als besonders geeignet erwiesen.

Hierfür sind Kupfer und Kupferlegierungen verwendet. Die Stegdicke des aus diesen Materialien gefertigten Streckmetalls beträgt je nach Größe des Wärmetauscherelements zwischen 0,4 und 1,5 mm. Für die auf der Trägerplatte angeordneten Rohre werden nahtlos gezogene Kupferrohre mit einer Wanddicke zwischen 0,5 und 1,5 mm bei einem Durchmesser zwischen 5 und 18 mm verwendet. Besonders günstig ist es, die Rohrleitung in Form einer Rohrschlange auf der Trägerplatte endlos zu verlegen, wobei die jeweiligen Rohrenden für die Anschlüsse etwa 5 cm über dem Rand der Trägerplatte hinausragen.

Mit dem erfindungsgemäßen Wärmetauscherelement, das durch Verwendung von im wesentlichen vorgefertigten Einzelteilen erheblich einfacher und kostengünstiger hergestellt werden kann, ist es nunmehr ohne Schwierigkeiten möglich, Kühlkörper im Wand- und/oder Deckenbereich von Räumen einzuputzen. Aufgrund einer Maschenlänge von vorzugsweise etwa 10 bis 40 mm ist der Materialeinsatz für die Trägerplatte begrenzt, was sowohl zu einem relativ geringen Gewicht des Wärmetauscherelements als auch zu niedrigeren Herstellungskosten führt.

Die Erfindung wird im folgenden anhand eines in den Zeichnungen dargestellten Ausführungsbeispiels noch näher beschrieben.

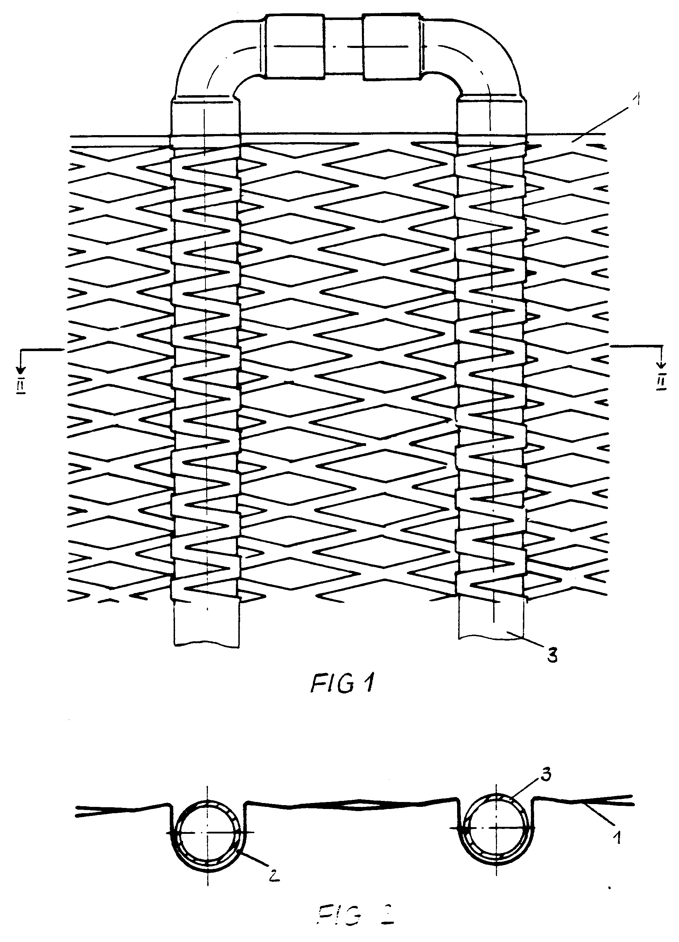

Figur 1 zeigt in einer Ansicht einen Teilausschnitt eines flachen Wärmetauscherelements.

Figur 2 zeigt einen Querschnitt der Darstellung der Figur 1 entlang der Linie II.

Mit 1 ist in den Figuren ein Ausschnitt einer gitterförmigen Trägerplatte (Streckgitter) bezeichnet, die parallel zu den Kanten tiefgezogene Sicken 2 aufweist, in denen die Rohrleitung 3 eingelegt und gegebenenfalls fixiert ist. Für die Herstellung der gitterförmigen Trägerplatte 1 wurde ein Metallblech aus SF-Cu mit einer Dicke von 0,8 mm verwendet. Dieses Kupferblech wurde mit versetzten Einschlitzungen versehen und dann einer streckenden Verformung um etwa 40 % unterzogen. Das nach diesem Arbeitsschritt entstandene Maschenwerk kann unterschiedliche Schlitzformen bzw. Maschenlängen aufweisen. Besonders günstig ist ein Maschenwerk aus Stegen und von diesen umschlossenen rautenförmigen Öffnungen, wobei die Maschenlänge etwa 30 mm und die Stegbreite etwa 3 mm beträgt. In dieses Kupferstreckmetall werden parallel zu einer Kante im Abstand von 5 bis 30 cm mittels einer Presse Sicken eingedrückt. Die Kupferrohrleitung wird dann in die Sicken eingelegt bzw. eingeklemmt und gegebenenfalls zusätzlich mit der Trägerplatte befestigt. An den Enden der Rohrleitung können Fittings zum Anschluß bzw. zur Verbindung der Rohre untereinander angeschlossen werden. Die Wärmetauscherelemente können ferner noch geeignete Anschlüsse für den Vor- und Rücklauf eines gasförmigen oder flüssigen Mediums aufweisen.

Die erfindungsgemäßen flachen Wärmetauscherelemente können sowohl an Decken als auch an Wänden befestigt und dann flächenbündig verputzt werden. Besonders geeignet sind die Wärmetauscherelemente für die Installation eines nichtsichtbaren Decken-Kühlsystems zur thermischen Entlastung von Räumen.

Weiterhin ist es möglich, die Wärmetauscherelemente auch auf eine abgehängte Raumdecke aufzulegen. Die Kühlkörper wären bei einer derartigen Anordnung ebenfalls nicht sichtbar.

## Patentansprüche

1. Flaches Wärmetauscherelement bestehend aus einer gitterförmigen Trägerplatte und mindestens einer auf der Trägerplatte angeordneten Rohrleitung, zur Verwendung als im Baumaterial einputzfähiger Kühlkörper für Decken und/oder Wände, **dadurch** **gekennzeichnet,** daß die gitterförmige Trägerplatte (1) aus Streckmetall besteht und parallel zu einer Kante verlaufende Sicken (2) zur fixierbaren Aufnahme der das zu kühlende Medium führenden Rohrleitung (3) aufweist, daß die Stegdicke der aus Kupfer oder einer Kupferlegierung bestehenden gitterförmigen Trägerplatte (1) 0,4 bis 1,5 mm beträgt und daß die Rohrleitung (3) aus nahtlos gezogenen Kupferrohren mit einer Wanddicke zwischen 0,5 und 1,5 mm und einem Durchmesser zwischen 5 und 18 mm besteht.

2. Flaches Wärmetauscherelement nach Anspruch 1, **dadurch ge****kennzeichnet,** daß die Tiefe der Sicke (2) größer ist als der Außendurchmesser der sie aufnehmenden Rohrleitung (3).

3. Flaches Wärmetauscherelement nach Anspruch 2, **dadurch ge****kennzeichnet,** daß die Schenkel der Sicke (2) geringfügig aufeinander zugebogen sind.

## Claims

1. A flat heat exchanger element comprising a latticed carrier plate and at least one pipeline arranged on the carrier plate for use as a cooling body for ceilings and/or walls which can be plastered into the building material, characterised in that the latticed carrier plate (1) consists of expanded metal and comprises channels (2) which extend in parallel to one edge and serve to fixably accommodate the pipeline (3) conveying the medium to be cooled, that the web thickness of the latticed carrier plate (1), which consists of copper or a copper alloy, amounts to 0.4 to 1.5 mm and that the pipeline (3) consists of seamlessly drawn copper pipes with a wall thickness of between 0.5 and 1.5 mm and a diameter of between 5 and 18 mm.

2. A flat heat exchanger element as claimed in Claim 1, characterised in that the depth of the channel (2) is greater than the outer diameter of the pipeline (3) which it accommodates.

3. A flat heat exchanger element as claimed in Claim 2, characterised in that the sides of the channel (2) are bent slightly towards one another.

## Revendications

1. Elément plat d'échangeur de chaleur consistant en une plaque support en forme de grille et en au moins une conduite tubulaire disposée sur la plaque support, à utiliser comme un radiateur susceptible d'être incorporé dans l'enduit d'un matériau de construction pour des revêtements ou des cloisons, élément plat d'échangeur de chaleur caractérisé en ce que la plaque support en forme de grille (1) consiste en un métal déployé et présente des moulures (2) qui s'étendent en parallèle à un bord pour la réception et la possible fixation de la conduite tubulaire (3) faisant circuler l'agent réfrigérant, en ce que l'épaisseur d'entretoisement de la plaque support (1) en forme de grille réalisée en un alliage à base de cuivre atteint 0,4 à 1,5 mm et en ce que la conduite tubulaire (3) consiste en des tubes de cuivre étirés sans soudure avec une épaisseur de paroi comprise entre 0,5 et 1,5 mm et un diamètre compris entre 5 et 18 mm.

2. Elément plat d'échangeur de chaleur selon la revendication 1, caractérisé en ce que la profondeur des moulures (2) est plus grande que le diamètre extérieur de la conduite tubulaire (3)à reçu par elles.

3. Elément plat d'échangeur de chaleur selon la revendication 2, caractérisé en ce que les branches des moulures (2) sont légèrement recourbées l'une sur l'autre.
